# EUROPEAN PATENT APPLICATION

(11) **EP 2 111 745 A1**
(43) Date of publication of application: **28.10.2009**
(21) Application number: 09158209.8
(22) Date of filing: 20.04.2009
(51) Int. Cl.: A01G 17/14

(54) **Support post and method to make the same**

(30) Priority: 21.04.2008 IT UD20080086
(71) Applicant: Valente Pali Precompressi SpA, 35011 Campodarsego (PD) (IT)
(72) Inventor: Valente, Alberto, 35010, Borgoricco (PD) (IT)
(74) Representative: Petraz, Gilberto Luigi

(57) **Abstract**

Support post (10) and relative method to make the same. The support post (10) comprises a shaped metal section which has a first longitudinal rib (11) that develops substantially for the whole length of the section. The support post (10) comprises an attachment element (12), advantageously two or more, made by means of mechanical working in correspondence with the first rib (11). The attachment element (12) is shaped so as to define on its surface a second rib (13) which overlaps the first rib (11).

## Description

### FIELD OF THE INVENTION

The present invention concerns a support post and the relative method to make it.

In particular the support post according to the present invention is used in agricultural applications, or more generally in any application whatsoever for the outside, to support, for instance, vines or other types of plants, in particular fruit plants such as apple trees, pear trees, kiwi trees or shrubs.

### BACKGROUND OF THE INVENTION

It is known, in a row of vines or fruit trees in general, such as apple trees, pear trees, kiwi etc., that the branches of these trees must be supported as they gradually grow, with the purpose of giving them a raised support from the ground and thus promote the correct growth of the fruit. To this end it is known to associate wires with vertical support posts, at intervals of a certain distance, which function as support elements for the branches and the foliage of the trees. The wires are associated with the posts by means of attachment elements made on at least one side of each post.

The attachment elements are made by means of mechanical working.

One disadvantage of the support posts is that the attachment elements are often not structurally rigid enough to resist the knocks and shakes which are caused by automatic machines during harvest time. Consequently the attachment elements tend to bend, and therefore require awkward manual operations in order to fix them, and/or they become unusable.

A further disadvantage of the support posts is that the attachment elements can have burrs deriving from the complex processes needed to make them, which can impede the insertion of the wires and/or their movement.

Purpose of the present invention is to make a support post provided with attachment elements having a good structural rigidity and obtainable by means of simple and economic operations.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purpose, a support post according to the present invention is preferably used, but not exclusively, in agricultural applications, or more generally in any application whatsoever for the outside, to support, for example, vines or any other type of plants.

The support post comprises a shaped metal section, substantially tubular, open or closed, which has at least a first longitudinal rib developing substantially for the whole length of the section.

According to a characteristic feature of the present invention the support post comprises at least an attachment element, advantageously two or more, made by means of mechanical working in correspondence with said first rib, in which said attachment element is shaped so as to define on its surface a second rib overlapping said first rib.

According to a variant of the present invention the second rib is limited dimensionally to an area surrounding the molding zone of the attachment element.

According to another variant of the present invention the second rib is made in a substantially symmetrical position with respect to the longitudinal axis of the first rib.

According to a further variant of the present invention the second rib comprises a central portion of the first rib protruding toward the outside.

Advantageously said mechanical working comprises at least a punching operation or, alternatively or in combination, at least a shearing operation and a cold drawing operation, so as to determine, advantageously with a single passage, the attachment element and the relative second rib.

In this way, the attachment elements provided by said second rib, made in substantial correspondence with the pre-existing first rib, are structurally very resistant to mechanical knocks. Therefore the attachment elements can support even high stresses deriving from the operations carried out by the automatic harvesting machines without bending.

Moreover said attachment elements are advantageously made in a single working pass by means of simple and economic operations which also allow costs to be contained.

### BRIEF DESCRIPTION OF THE DRAWINGS

These and other characteristics of the present invention will become apparent from the following description of a preferential form of embodiment, given as a non-restrictive example with reference to the attached drawings wherein:

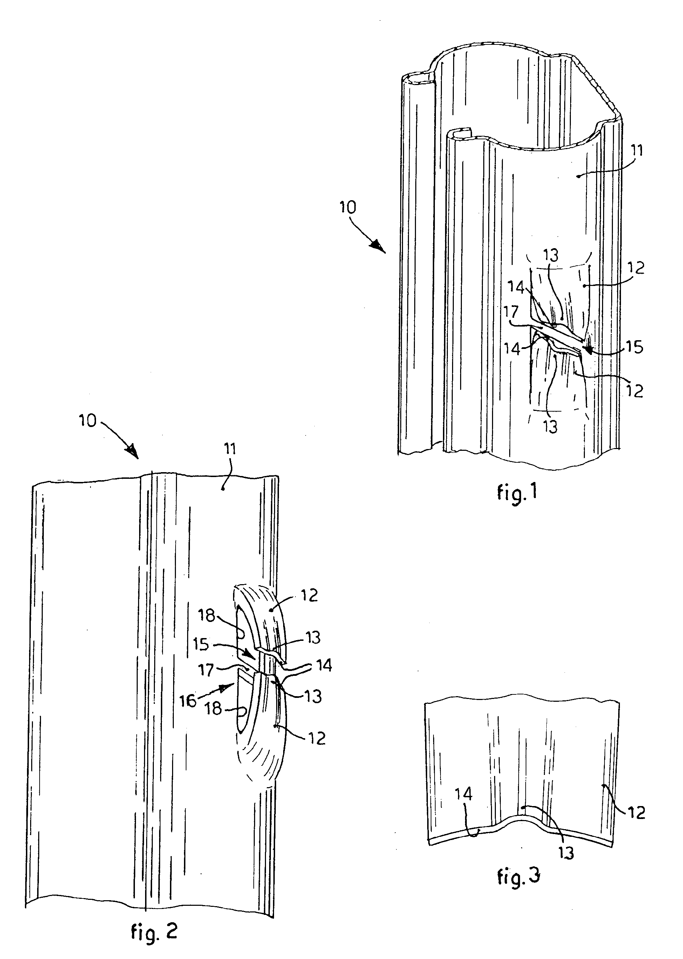

- fig. 1 is a three-dimensional view of a support post according to the present invention;
- fig. 2 is a lateral view of a detail in fig. 1;
- fig. 3 is an enlarged detail of fig. 2.

### DETAILED DESCRIPTION OF A PREFERENTIAL FORM OF EMBODIMENT

With reference to the attached drawings, a support post 10 according to the present invention is used in agricultural applications, or more generally in any application for the outside, to support, for example, vines or other types of plants.

The support post 10 comprises a section made of metal, advantageously metal sheet, substantially tubular shaped, open or closed on one side and having a first rib 11 which develops for a substantial part of the length of the section and confers structural rigidity to the post 10.

In this case, the first rib 11 comprises a central portion of said side, curved toward the outside. It cannot be excluded, however, that the first rib may have any other geometric profile, rectangular or trapezoidal for example.

In correspondence with the first rib 11 the support post 10 is also shaped so as to define, in this case, a pair of opposite teeth 12. Each tooth 12 defines an attachment element for a support wire or wires.

The teeth 12 are made starting from the first rib 11 by means of mechanical working such as at least a punching pass and/or shearing and/or cold drawing.

It is understood that the support post 10 can be shaped so as to define, on the first rib 11, a plurality of teeth 12.

Each tooth 12 is made so as to have a second rib 13 able to confer additional structural rigidity to the tooth 12 itself.

The second rib 13 of each tooth 12 is made overlapping the first rib 11 and has a reduced length with respect to the first rib 11. In particular the second rib 13 is limited dimensionally to an area surrounding the molding zone of the tooth 12.

The second rib 13 is made in a substantially symmetrical position with respect to the longitudinal axis of the first rib 11 and comprises, in this case, a central portion of the first rib 11 curved toward the outside. It cannot be excluded, however, that the second rib 13 can have any geometric profile.

In this case each tooth 12 has a substantially trapezoidal shape, in which the opposite sides 14 of each tooth 12 are inclined at a pre-determined angle, advantageously about 45°, for example to prevent the wire from accidentally coming out, and they are distanced so as to form an opening 15, inside which the support wire or wires are able to be inserted.

In correspondence with the pair of teeth 12, the first rib 11 has a substantially H shaped portion 16, in which the central segment 17 of the portion 16 has the same inclination and height as the opening 15. The central segment 17 confers structural continuity to the section.

The H portion substantially comprises two notches 18, a lower one and an upper one, opposite each other. Both the notches 18 have a substantially trapezoidal shape and mating with the shape of the teeth 12.

It is clear that modifications and/or additions of parts may be made to the support post as described heretofore, without departing from the field and scope of the present invention.

It is also clear that, although the present invention has been described with reference to some specific examples, a person of skill in the art shall certainly be able to achieve many other equivalent forms of support post, having the characteristics as set forth in the claims and hence all coming within the field of protection defined thereby.

## Claims

1. Support post comprising a shaped metal section which has at least a first longitudinal rib (11) developing substantially for the whole length of said section, **characterized in that** it comprises at least an attachment element (12), advantageously two or more, made by means of mechanical working in correspondence with said first rib (11), said attachment element (12) being shaped so as to define on its surface a second rib (13) overlapping said first rib (11).

2. Support post as in claim 1, **characterized in that** said second rib (13) is dimensionally limited to an area surrounding the molding zone of the attachment element (12).

3. Support post as in claim 2, **characterized in that** said second rib (13) is made in a substantially symmetrical position with respect to the longitudinal axis of the first rib (11).

4. Support post as in claim 3, **characterized in that** the second rib (13) comprises a central portion of the first rib (11) protruding toward the outside.

5. Method to make a support post (10) comprising a shaped metal section which has at least a first longitudinal rib (11) developing substantially for the whole length of said section, **characterized in that** it comprises at least a step of mechanical working in which, in correspondence with said first rib (11), at least an attachment element (12) is made, advantageously two or more, shaped so as to define on its surface a second rib (13) overlapping said first rib (11).

6. Method as in claim 5, **characterized in that** said mechanical working step comprises punching and/or shearing and/or cold drawing operations.
